# EUROPEAN PATENT SPECIFICATION

(11) **EP 2 738 108 B1**
(45) Date of publication and mention of the grant of the patent: **15.07.2015**
(21) Application number: 14151081.8
(22) Date of filing: 12.10.2009
(51) Int. Cl.: B65D 1/02, B65D 23/10, B65D 85/80

(54) **Plastics container**
Kunststoffbehälter
Récipient en plastique

(30) Priority: 14.10.2008 GB 0818830
(43) Date of publication of application: 04.06.2014
(62) Divisional of application: 12176562.2
(73) Proprietor: Nampak Plastics Europe Limited, Buckinghamshire MK16 9QJ (GB)
(72) Inventor: Glover, Andrew, Chesham, Buckinghamshire HP5 3EE (GB)
(74) Representative: McWilliams, David John

(56) References cited:
- EP-A2- 0 909 711
- WO-A1-99/22994
- US-A1- 2004 140 284
- US-A1- 2006 177 533

## Description

The present invention relates to a plastics container, particularly, but not exclusively, to a blow moulded plastics container of the kind commonly used for transporting or storing milk; and to a method of making such a container.

It is known to package milk in lightweight plastics containers for retail through supermarkets and the like. There is a desire to make such plastics containers as light as possible, whilst ensuring that they remain fit for purpose in delivering the product in good condition for consumers.

In an attempt to define "fit for purpose", the packaging industry works to an empirical 60N topload force test. If a lightweight plastics container is able to withstand a 60N topload force applied at a rate of 4mm per second over a set distance, experience shows that it will survive the milk filling and distribution system and retail successfully to the consumer.

At present, for each container of the regular capacity sizes of milk container (e.g. 1 pint, 2 pint, 4 pint, 6 pint or 1 litre, 2 litre etc), there is a weight "ceiling" which means that it is difficult to manufacture a lighter container that is still fit for purpose (e.g. suitable to pass the empirical 60N topload force test).

The present invention has been devised with a view to reducing the weight ceiling of standard capacity containers without compromising structural integrity i.e. containers remain fit for purpose.

Various configurations of blow moulded plastics containers are known from EP0909711, which discloses a container according to the preamble of claim 1 and a method according to the preamble of claim 7. The containers have an integral neck which is reinforced to overcome problems associated with the automated fitting of a closure to the neck.

According to the invention, there is provided a blow moulded plastics container for storing liquid (e.g. milk), comprising: a body portion defining a chamber for storing liquid; and a neck portion extending from the body portion, the neck portion having an open passageway therethrough for passage of liquid to/from the chamber, wherein the neck and body portions intersect in a closed loop which has a non-planar profile, wherein the closed loop has a circular footprint.

Historically, the intersection between the neck and body portions of a conventional lightweight blow moulded plastics container is a potential weak point and must be reinforced by locally increasing the thickness of plastics material in this region relative to that in the majority of the body portion. However, the present inventors believe that the weak point arises because the neck and body portions intersect in a closed loop which has a substantially planar profile. The present inventors have surprisingly found that by re-designing the intersection to provide a closed loop with a non-planar profile, the need for material reinforcement may be reduced or even obviated altogether. In this way, the plastics container may be made significantly lighter, perhaps even 10-15% lighter without compromising its structural integrity (e.g. as determined by the empirical 60N topload force test).

Providing a closed loop having a circular footprint (i.e. of constant radius) provides equalisation of forces transferred down into the body portion during topload force testing.

The container is of the kind configured to stand on a planar surface, e.g. on a trolley or refrigerator shelf. The container is preferably configured such that the body portion, neck portion and open passageway have a common longitudinal axis, intended to be generally vertical in storage (e.g. with the rim of the open passageway presented generally horizontally). The closed loop is preferably concentric with said common longitudinal axis of the body portion, neck portion and open passageway. Such concentricity is desirable to avoid twisting forces that might otherwise occur during topload force testing.

Having an open passageway which is concentric with the central longitudinal axis of the body portion of the container is also advantageous in reducing foaming effects during the filling of the container with liquid, e.g. milk. Such containers are often referred to as "centre neck" containers and are therefore distinct in construction from containers in which the open passageway of the neck portion is "off centre" or arranged at an angle of inclination away from vertical, e.g. in the case of conventional watering cans or jerry cans.

The closed loop may curve in three mutually perpendicular directions. The neck portion may have a substantially cylindrical part with a longitudinal axis, in which case the closed loop preferably curves around the longitudinal axis at a constant radius and may also curve in a direction parallel to such axis. The closed loop may lie on a hyperbolic paraboloid surface (which is often referred to as the saddle surface or the standard saddle surface).

In preferred embodiments, the body portion of the container defines shoulders (typically a curved upper part of the body portion) and the closed loop is located at the transition between the neck portion and the shoulders of the body portion. More particularly, the closed loop is preferably located at the transition between the substantially cylindrical part and the shoulders of the body portion. In that sense, the substantially cylindrical part may define an intermediate formation between the body portion and what is commonly referred to as the 'neck platform' of the container, i.e. the region at the base of the threaded neck in conventional milk containers.

Preferably, the cylindrical part defines a circular footprint and more preferably the side walls of the cylindrical part are parallel with the longitudinal axis. This provides for further concentricity of structure, advantageous during topload force testing.

The neck portion may have a screw thread for engaging a lid with a corresponding screw thread. The neck portion may have a stepped profile, and the width of the neck portion may be greatest where the neck portion intersects with the body portion. The stepped profile may compromise a frusto-conical surface, providing a gradual variation in the width of the neck portion along at least a part of its length.

In preferred embodiments, the neck portion defines a threaded portion for receiving a lid in threaded engagement therewith and the body portion defines a upper shoulder region of curved profile; wherein the neck portion defines a circular cylindrical portion below said threaded portion, having side walls concentric with and parallel to said central longitudinal axis, and the intersection with the shoulder region of the body portion is non-planar. The threaded portion preferably meets the cylindrical portion in a closed loop of planar intersection. Preferably, the cylindrical portion is an intermediate formation between the threaded portion and the body portion.

Other aspects and features of the invention will be apparent from the claims and the following description of preferred embodiments, made by way of example with reference to the accompanying drawings, in which:
Figure 1 shows a perspective view of part of a plastics container embodying the invention;
Figure 2 shows a side view of the plastics container of Figure 1;
Figure 3 shows a front view of the plastics container of Figure 1;
Figure 4 illustrates a standard saddle surface;
Figure 5 is a schematic cross section through a three-piece mould tool for blow moulding the container of Figures 1 to 3;
Figures 6a-6c illustrate a first plastics container embodying the invention;
Figure 7 illustrates the first plastics container of Figures 6a-6c being conveyed in series;
Figure 8 illustrates the first plastics container of Figures 6a-6c stored with other such containers on a trolley;
Figures 9a and 9b illustrate a second plastics container embodying the invention;
Figure 10 illustrates the second plastics container of Figures 9a and 9b stored with other such containers on a trolley;
Figure 11 is a schematic diagram showing a cross-section through a mould tool for blow moulding a plastics container of substantially rectangular footprint; and
Figure 12 is a schematic diagram of a preferred mould tool for producing a blow moulded container of non-rectangular footprint.

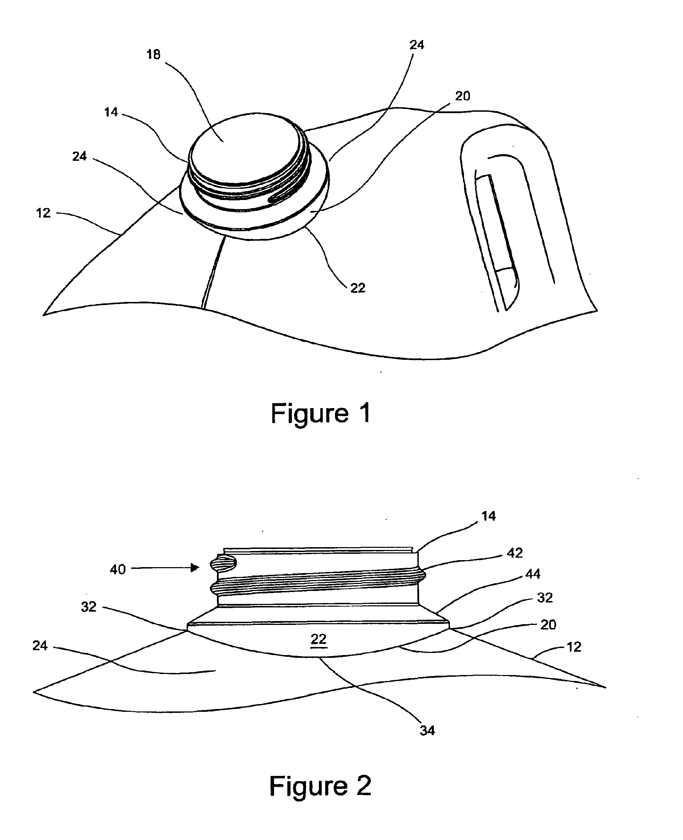

Figure 1 shows a lightweight blow moulded plastics container embodying the invention. The container comprises a body portion 12 and a neck portion 14. The body portion 12 defines a chamber for storing liquid (e.g. milk). The neck portion 14 is mounted on and extends from the body portion 12 and has an open passageway 18 therethrough which communicates with the chamber and through which the container is filled with, and emptied of, liquid. As is normal in the art, the passageway 18 may by covered with a hermetic seal.

The neck portion 14 intersects the body portion 12 in a closed loop 20 with a non-planar profile. The closed loop 20 is located at the transition between the substantially cylindrical wall 22 at the base of the neck portion 14 and the upper part or shoulders 24 of the body portion 12.

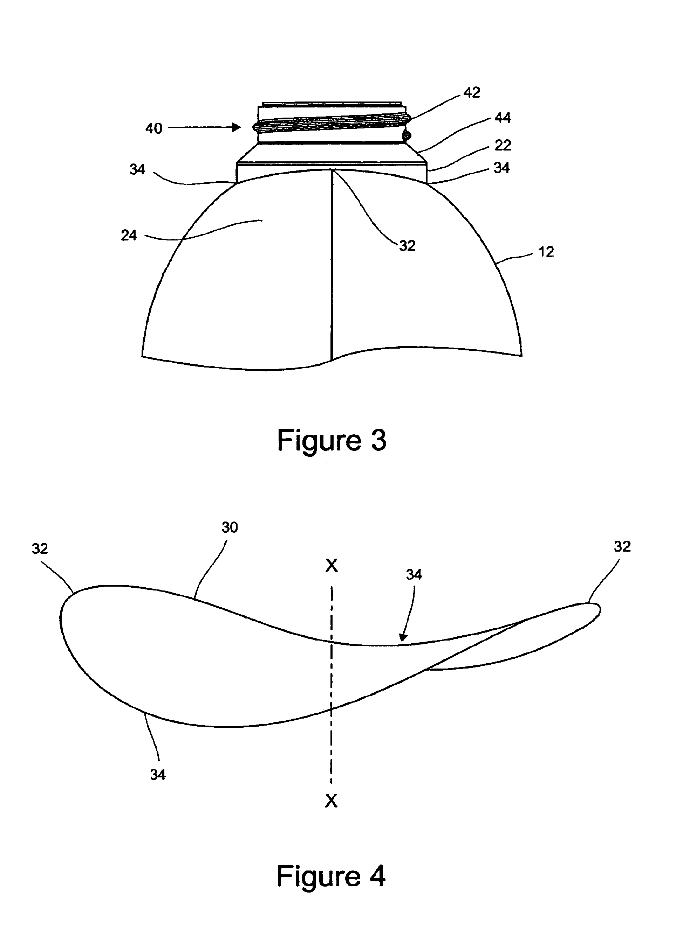

The non-planar profile of the closed loop 20 is best illustrated with reference to Figure 4 which shows a standard saddle surface 30. The closed loop 20 lies on such a surface at a fixed distance from the central axis XX. The closed loop 20 has a pair of maxima 32 and a pair of minima 34, and these are seen in Figure 2 and 3 disposed equidistantly around the circumference of the cylindrical wall 22.

In the illustrated embodiment, the closed loop 20 has a substantially circular footprint, being bound by cylindrical wall 22.

The neck portion 14 may have a substantially cylindrical upper part 40 with a screw thread 42 for engaging a lid (not shown) with a corresponding screw thread. The cylindrical upper part 40 and cylindrical wall 22 at the base of the neck portion 14 are separated by a frusto-conical section 44, arranged such that the neck portion is wider at its base than at its free end. The cylindrical upper part 40, cylindrical wall 22 and frusto-conical section 44 are all centred on a common longitudinal axis. The height of the cylindrical wall 22 (in a direction parallel to the common longitudinal axis) varies in a circumferential direction around the periphery of the neck portion 14, dependent upon curvature of the closed loop 20 in a direction parallel to the common longitudinal axis. The lower end of the cylindrical wall 22 defines the non-planar intersection with the shoulder region of the body portion 12.

It should be noted that the container is of the kind configured to stand on a planar surface, e.g. on a trolley or refrigerator shelf. More particularly, the body portion 12, neck portion 14 and open passageway 18 have a common (central) longitudinal axis, intended to be generally vertical during storage of the container (i.e. with the rim of the open passageway 18 presented generally horizontally). The closed loop 20 is coaxial with said common longitudinal axis of the body portion 12, neck portion 14 and open passageway 18. The concentricity of the body portion 12, neck portion 14, open passageway 18 and closed loop 20 is desirable to avoid twisting forces that might otherwise occur during topload force testing.

The container may also be referred to as a "centre neck" container, by virtue of the open passageway being concentric with the central longitudinal axis of the body portion of the container. Such a configuration is particularly advantageous in reducing foaming effects during the filling of the container with liquid, e.g. milk.

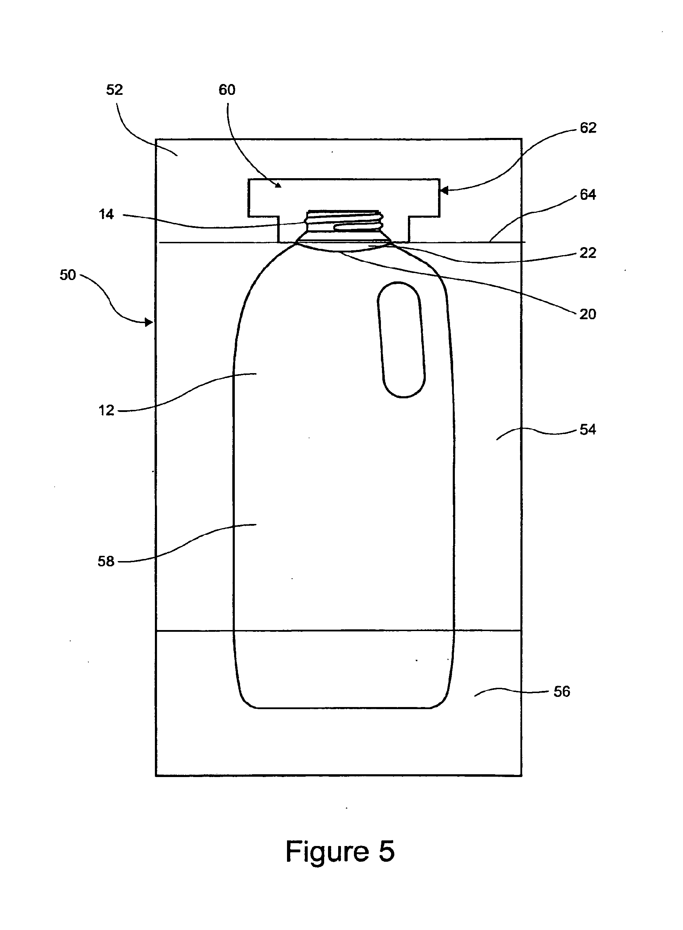

The container is manufactured by blow moulding using an appropriately shaped mould tool. An example of a suitable tool is shown in Figure 5, wherein the tool 50 includes a neck block 52, body block 54 and base block 56. The body block 54 and base block 56 define a continuous cavity 58 in which the body portion 12 of the container is formed. The neck block 52 defines a cavity 60 in which the threaded neck portion 14 of the container is formed.

As is common in the art, the neck block 52 is provided with a neck insert 62 configured to define the desired shape and thread formation of the neck portion 14. Neck inserts of different internal configuration are interchangeable within the neck block 52. Similarly, the neck block 52 may be interchangeable with different body blocks 54.

It will be understood that the body portion 12 and neck portion 14 are distinct parts of the container, which are conventionally defined by distinct pieces of the mould tool 50, i.e. the body block 54 and neck block 52, respectively, separated by a split line 64 of the tool 50 (at the transition between the neck block 52 and the body block 54). However, in preferred embodiments of the invention, the closed loop 20 is below the split line. More particularly, the cylindrical part 22 of the neck portion 14 is formed below the split line 64, within the body block 54. Hence, the closed loop 20 is located adjacent, yet below, what is commonly referred to as the 'neck platform' of the container (known conventionally as the part of the neck portion which meets the shoulders of the body portion). However, in this case, the cylindrical part is effectively an intermediate formation between the neck platform and the shoulders of the body portion. In each case, it will be preferred if the closed loop and associated intermediate formation is formed in the body block 54, so that different threaded portions can be blow moulded therewith using different neck blocks 52.

The result is a strengthened container, which overcomes the conventional requirement for increased wall thickness between the neck and body portions in order to overcome structural weakness.

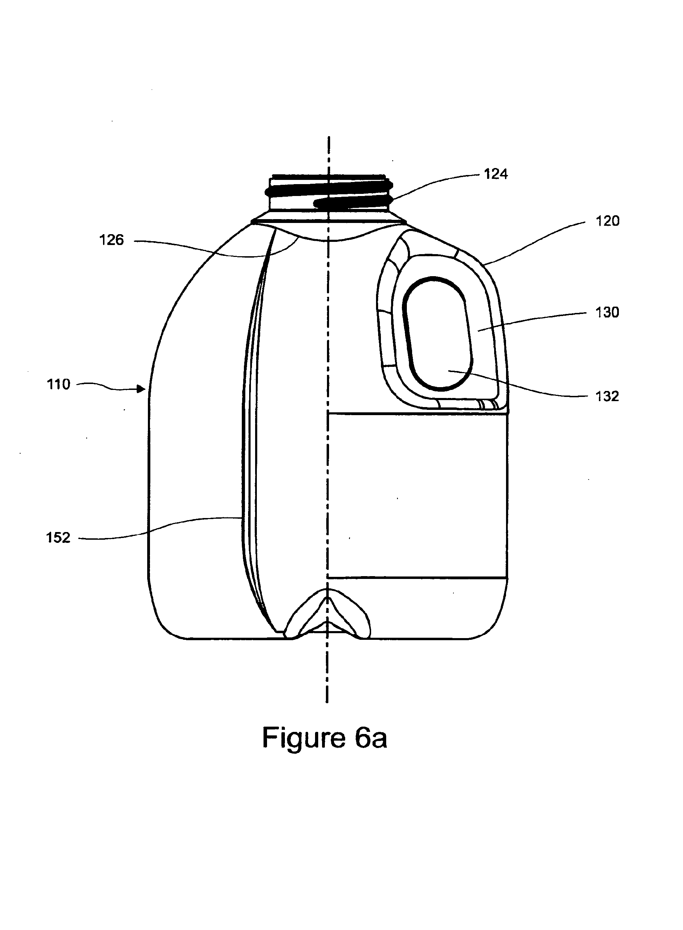

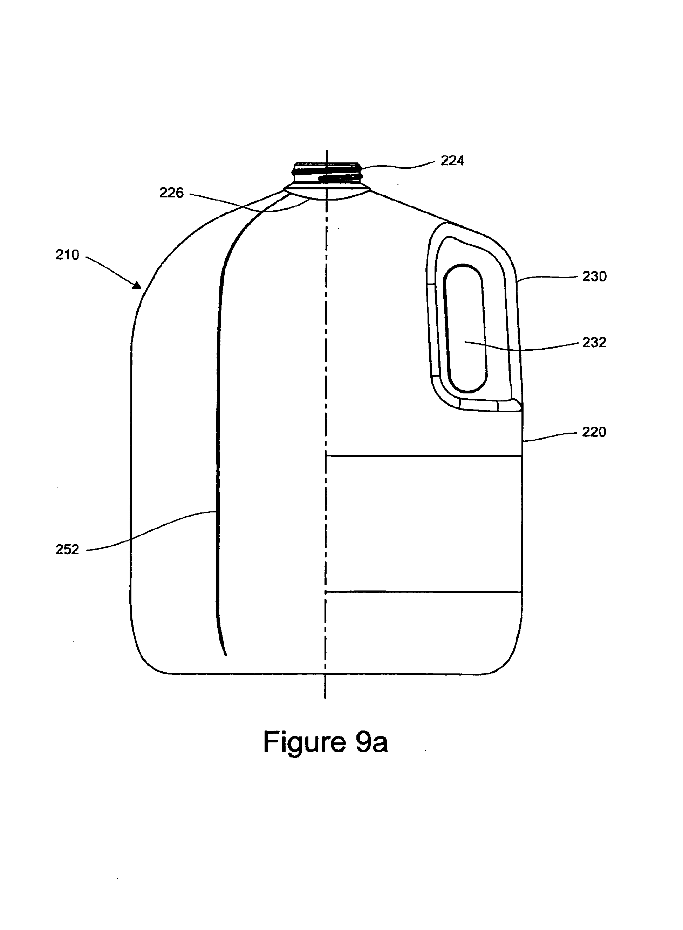

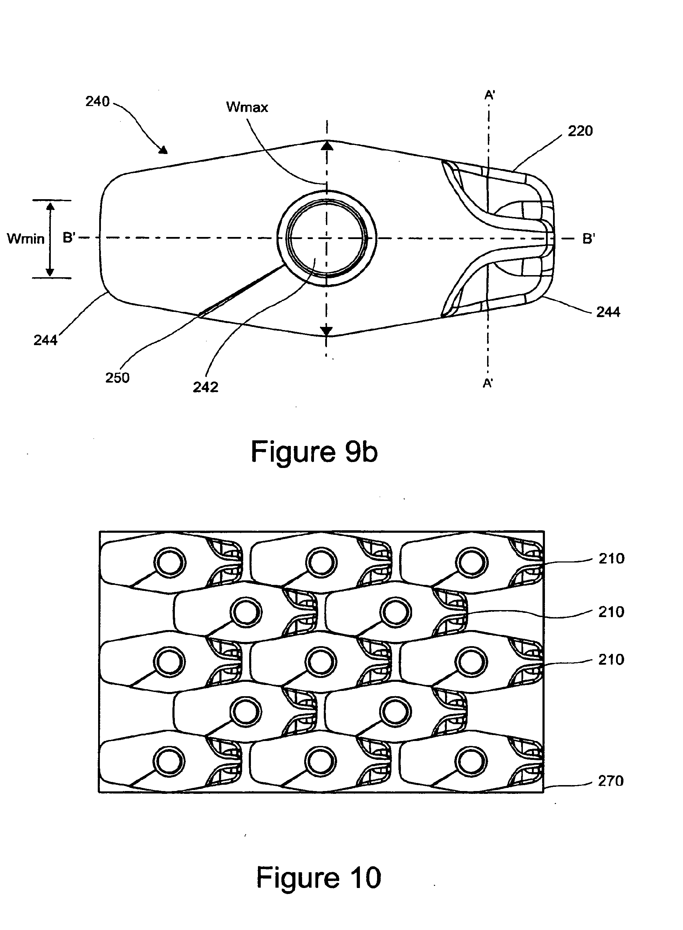

Figures 6a-6c illustrate respectively perspective, plan and front views of a first plastics container 110, and Figures 9a and 9B illustrate respectively plan and front views of a second plastics container 210. The first and second plastics containers 110, 210 have different capacities, with the first container 110 having a 1 pint capacity and the second container 210 having a 6 pint capacity. Otherwise, the first and second containers 110, 210 have many features in common, including a body 120, 220 with a neck portion 124, 224 which intersects the rest of the body in a closed loop 126, 226 with a non-planar profile.

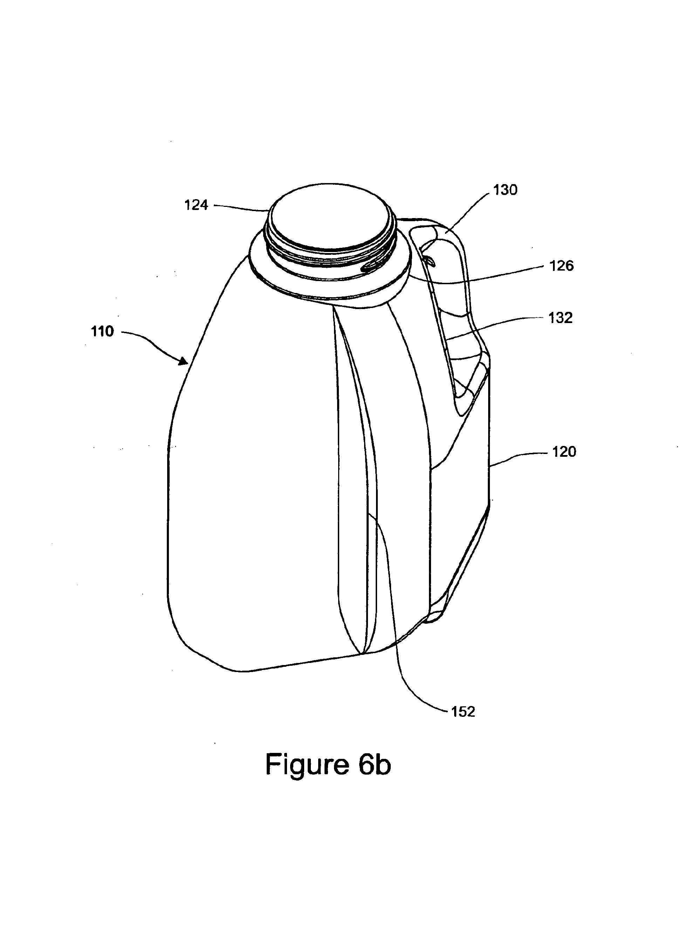

The body 120 of the first container 110 has an integral handle 130 defining an aperture 132 (often referred to as the handle 'eye') with a central axis AA extending in a first direction through the body 120. The central axis AA is parallel to the direction of separation of the two parts of the mould - shown schematically in Figure 6b - in which the first container 110 is formed.

The body 120 projects a footprint 140 which in the present case is taken to be the outermost periphery visible in the plan view. The footprint 140 has a longitudinal axis BB extending in a second direction which is perpendicular to the first direction. The footprint 140 has a width which varies along its longitudinal axis BB, and is greater in a middle region 142 of the footprint 140 than at either longitudinal end 144 thereof. In fact, the maximum width (Wmax) is in the middle region 142 and the minimum width (Wmin) is at either longitudinal end 144. The ratio of Wmax:Wmin is about 5:1. The footprint 140 has a substantially truncated-diamond shape, with the longitudinal ends 144 being present in place of one pair of corners along the longitudinal axis BB. The longitudinal ends 144 represent the opposed parallel sides of the container 110, with central axis AA parallel thereto. The internal angles are non-right angles, i.e. at the middle region the opposing internal angles are greater than 90 degrees. The footprint 140 is generally six-sided and is distinct from four-sided or square footprints know n in the art, as well as known quasi-octagonal footprints defined by a generally square bodies having curved or truncated corner regions which themselves define diametrically opposing sides/surfaces.

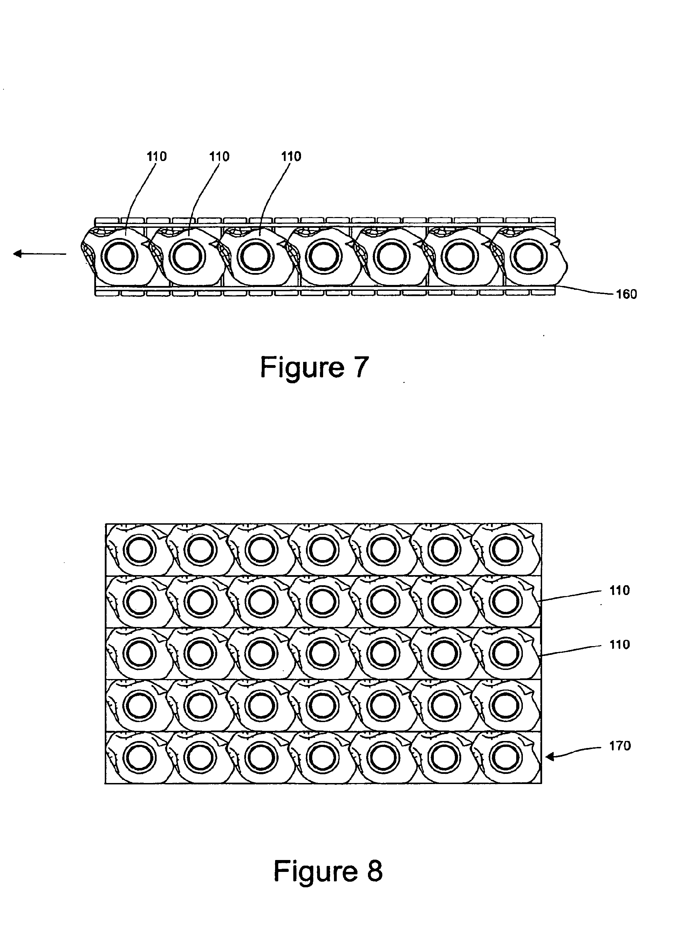

The footprint 140 of the container 110 includes a peripheral step 150, which is formed by a vertical groove or rib 152 in the body 150. The rib 152 helps with aligning multiple containers 110 in a predetermined orientation relative to an external datum, such as a conveyor 160, as shown in Figure 7. In this way the containers 110 may be arranged into a close packed array, for example when filling a standard trolley shelf 170 as shown in Figure 8.

Figures 9a and 9b illustrate the body 220 of the second container 220 having an integral handle 230 defining an aperture 232 with a central axis A'A' extending in a first direction through the body 220. The body 220 has a footprint 240 which is visible in Figure 9a. The footprint 240 has a longitudinal axis B'B' extending in a second direction which is perpendicular to the first direction. The footprint 240 has a width which varies along its length, and is greatest (Wmax) in a middle region 242, and smallest (Wmin) at either longitudinal end 244. The ratio of Wmax:Wmin is about 3:1. The footprint 240 has a substantially truncated-diamond shape; the longitudinal ends 244 replacing two corners along the longitudinal axis B'B' and adding an additional two sides to the otherwise four-sided shape. The footprint 240 includes a slight peripheral step 250 formed by a vertical rib 252 which in the case of container 210 is more for styling than alignment purposes. As shown in Figure 10, multiple containers 210 are arranged in a close packed array, with adjacent rows offset by half a container length to fit the width of a standard trolley shelf 270.

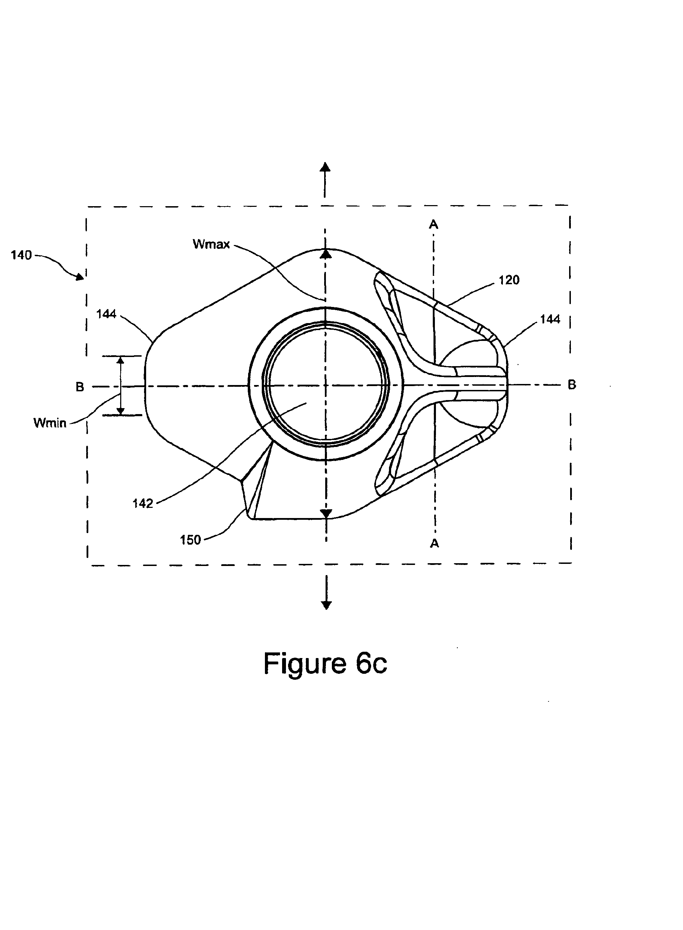

The containers described in respect of Figures 6 to 10 are preferably formed by blow moulding. Preferably, the mould tool is configured such that the longitudinal axis of the handle and longitudinal axis of the body are in line with one another along a centre split line of the tool (such that the handle is arranged at one corner of the body). Put another way, the mould tool is configured so that the mould split line is arranged corner to corner with respect to the body, with the middle region of the body extending in the direction of opening of the tool (perpendicular to the split line).

As with the embodiment of the Figures 1 to 3, the containers 110, 210 include a centre neck open passageway, which is useful in reducing foaming effects during filling of the container with liquid, e.g. milk. The neck and passageway are arranged with the same concentricity considerations (with respect to the central vertical axis of the body) as the embodiments of Figures 1 to 3, to reduce for adverse topload forces during testing.

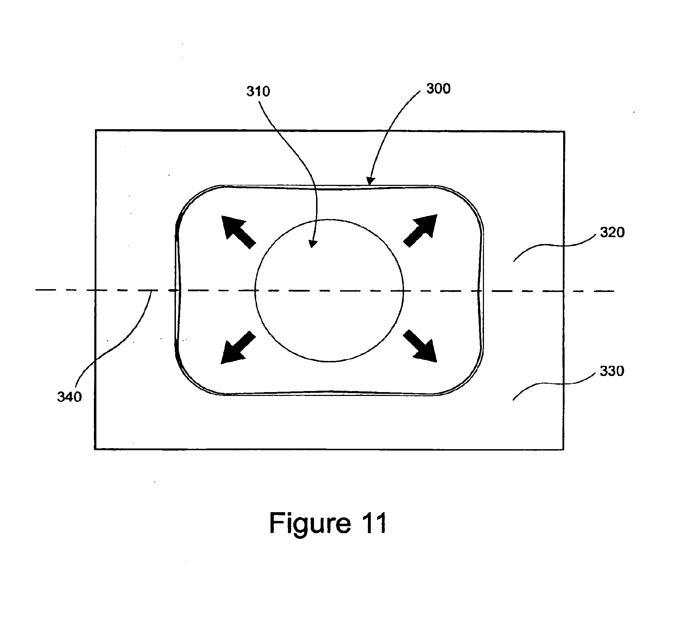

A known plastics container has a substantially rectangular footprint, with two corner regions on each side of a notional centre line aligned with the longitudinal axis, with all four corner regions equidistant thereform. An example of such a known footprint is shown at 300 in Figure 11. Such a container may be of blow moulded construction, e.g. formed by blow moulding a parison 310 in a mould with two parts 320, 330 which separate along a notional centre line 340 (e.g. along the central longitudinal axis of the footprint of the container in Figure 11) when ejecting the container from the mould.

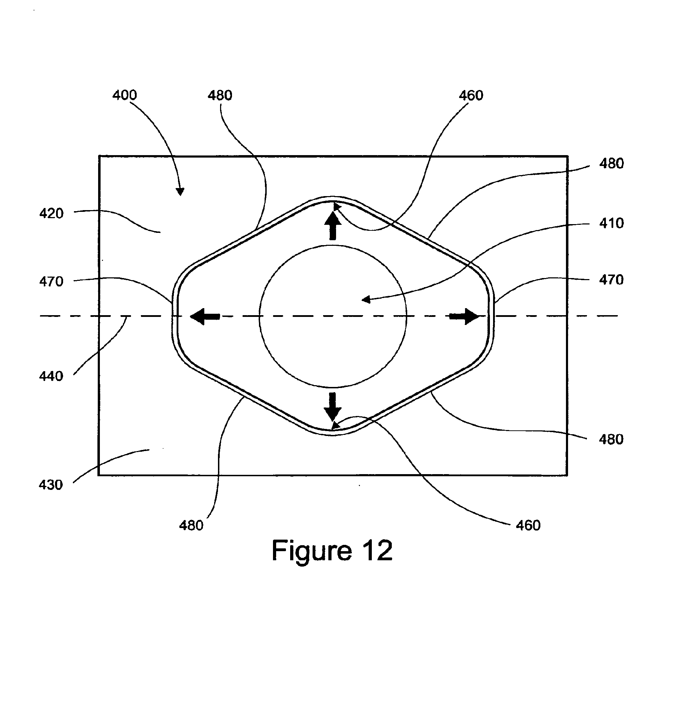

Figure 12 shows a modified mould tool 400, wherein the split line 440 of the mould tool pieces 420, 430 is arranged generally 'corner to comer' of a footprint of non-rectangular diamond shape of the kind described above (i.e. effectively at 45 degrees to that shown in Figure 11). Providing that the corners 460 arranged at 90 degrees to the split line 400 are not excessively deep, it has been found that the stretching/thinning effect on the parison 410 is likely to be less extreme than with conventional mould tools of the kind shown in Figure 11, resulting in more even distribution of plastic within the wall thickness.

As can be seen, the central longitudinal axis of the footprint in Figure 12 is aligned with the split line 440 of the mould tool 400. Preferably, the handle eye of the container (not visible in Figure 12) is also aligned with the split line 440, as would be the case for the containers shown in Figures 6c and 9b.

The footprint defined by the mould tool 400 is generally diamond-shaped, being six-sided with two generally opposing longitudinal end surfaces 470 separated by four angled side surfaces 480. The footprint is non-rectangular and the internal angles of the footprint in the middle region are greater than the internal angles at the longitudinal ends of the footprint. Hence, the width of the footprint is greatest at the middle region and smallest at either longitudinal end.

## Claims

1. A blow moulded plastics container for storing liquid (e.g. milk), comprising: a body portion (12) defining a chamber for storing liquid; and a neck portion (14) extending from the body portion, the neck portion having an open passageway (18) therethrough for passage of liquid to/from the chamber; **characterised in that** the neck and body portions (12, 14) intersect in a closed loop (20) of a circular footprint and a non-planar profile.

2. A plastics container according to claim 1 wherein the body portion (12), neck portion (14) and open passageway (18) have a common longitudinal axis (XX), and the closed loop (20) is concentric with said longitudinal axis.

3. A plastics container according to claim 1 wherein the base of the neck portion (14) has a substantially cylindrical part (22) with a longitudinal axis, with the closed loop (20) curving around the longitudinal axis at a constant radius and in a direction parallel to the longitudinal axis.

4. A plastics container according to claim 3 wherein the body portion (12) defines shoulders (24) and the closed loop (20) is located at the transition between the substantially cylindrical part (22) and the shoulders of the body portion.

5. A plastics container according to claim 3 or claim 4 wherein the cylindrical part (22) defines a circular footprint.

6. A plastics container according to claim 4 or 5 wherein the side walls of the cylindrical part (22) are parallel with the longitudinal axis.

7. A method of making a plastics container according to any one of claims 1 to 6, the method comprising the steps of providing a mould tool (50) configured for forming a container having a body portion (12) defining a chamber for storing liquid; and a neck portion (14) extending from the body portion, the neck portion having an open passageway (18) therethrough for passage of liquid to/from the chamber, wherein the neck and body portions (12, 14) intersect in a closed loop (20) which has a non-planar profile, and blow moulding plastics in the mould to produce the container, **characterised in that** the mould tool includes a neck block (52) for forming a threaded portion of the container, and a body block (54) including a cavity (60) configured to form shoulders (24) of the container, wherein the body block is further configured for producing an intermediate formation between the threaded portion and shoulders of the container, wherein the intermediate formation appears as part of the neck portion (14), and wherein the intersection of the intermediate formation and the shoulders (24) is a non-planar closed loop (20).

8. A method according to claim 7 wherein the intermediate formation is formed at the upper end of the body block (54), so as to be adjacent a split line (64) between the neck block (52) and body block (54) during moulding.

9. A method according to claim 8 wherein the body block (54) is configured so that the intermediate formation defines a cylindrical part (22) having sides walls extending parallel and concentric with the longitudinal central axis of the container.

## Patentansprüche

1. Blasgeformter Kunststoffbehälter zum Speichern einer Flüssigkeit (z. B. Milch), aufweisend: ein Gehäuseteil (12), welches eine Kammer zum Speichern einer Flüssigkeit bestimmt, und ein Halsteil (14), welches sich von dem Gehäuseteil erstreckt, wobei das Halsteil einen offenen Durchgang (18) dort hindurch für einen Durchfluss einer Flüssigkeit in die Kammer / aus der Kammer aufweist, **dadurch gekennzeichnet, dass** das Halsteil (14) und das Gehäuseteil (12) sich in einer geschlossenen Schleife (20) einer kreisförmigen Standfläche und eines nicht ebenen Profils schneiden.

2. Kunststoffbehälter nach Anspruch 1, wobei das Gehäuseteil (12), das Halsteil (14) und der offene Durchgang (18) eine gemeinsame Längsachse (XX) aufweisen, und die geschlossene Schleife (20) konzentrisch zu der Längsachse ist.

3. Kunststoffbehälter nach Anspruch 1, wobei die Basis des Halsteils (14) ein im Wesentlichen zylindrisches Teil (22) mit einer Längsachse aufweist, wobei die geschlossene Schleife (20) sich um die Längsachse in einem konstanten Radius und in einer Richtung parallel zu der Längsachse krümmt.

4. Kunststoffbehälter nach Anspruch 3, wobei das Gehäuseteil (12) die Schultern (24) bestimmt und wobei sich die geschlossene Schleife (20) an einem Übergang zwischen dem im Wesentlichen zylindrischen Teil (22) und den Schultern des Gehäuseteils befindet.

5. Kunststoffbehälter nach Anspruch 3 oder Anspruch 4, wobei das zylindrische Teil (22) eine kreisförmige Standfläche bestimmt.

6. Kunststoffbehälter nach Anspruch 4 oder 5, wobei die Seitenwände des zylindrischen Teils (22) parallel zu der Längsachse sind.

7. Verfahren zur Herstellung eines Kunststoffbehälters nach einem der Ansprüche 1 bis 6, wobei das Verfahren die Schritte aufweist: ein Bereitstellen eines Formwerkzeugs (50), welches zum Formen eines Behälters mit einem Gehäuseteil (12), welches eine Kammer zum Speichern einer Flüssigkeit bestimmt; und einem Halsteil (14) ausgestaltet ist, welches sich von dem Gehäuseteil erstreckt, wobei das Halsteil einen offenen Durchgang (18) dort hindurch für einen Durchfluss einer Flüssigkeit in die Kammer / aus der Kammer aufweist, **dadurch gekennzeichnet, dass** das Halsteil (14) und das Gehäuseteil (12) sich in einer geschlossenen Schleife (20) schneiden, welche ein nicht ebenes Profil aufweist, und ein Blasformen von Kunststoff in dem Formwerkzeug, um den Behälter zu erzeugen, **dadurch gekennzeichnet, dass** das Formwerkzeug einen Halsblock (52), um ein Gewindeteil des Behälters zu erzeugen, sowie ein Gehäuseblock (54) mit einem Hohlraum (60) aufweist, welcher ausgestaltet ist, um die Schultern (24) des Behälters zu bilden, wobei der Gehäuseblock ferner ausgestaltet ist, um eine Zwischenbildung zwischen dem Gewindeteil und den Schultern des Behälters zu erzeugen, wobei die Zwischenbildung als ein Teil des Halsteils (14) ausgebildet wird, und wobei der Schnittpunkt der Zwischenbildung und der Schultern (24) eine nicht ebene geschlossene Schleife (20) ist.

8. Verfahren nach Anspruch 7, wobei die Zwischenbildung am oberen Ende des Gehäuseblocks (54) gebildet wird, um zu einer Trennlinie (64) zwischen dem Halsblock (52) und dem Gehäuseblock (54) benachbart zu sein.

9. Verfahren nach Anspruch 8, wobei der Gehäuseblock (54) so ausgestaltet ist, dass die Zwischenbildung einen zylindrischen Teil (22) mit Seitenwänden bestimmt, welche sich parallel und konzentrisch zu der zentralen Längsachse des Behälters erstrecken.

## Revendications

1. Récipient en plastique moulé par extrusion-soufflage pour stocker du liquide (par exemple du lait), comprenant : une partie de corps (12) définissant une chambre pour stocker du liquide ; et une partie de goulot (14) s'étendant à partir de la partie de corps, la partie de goulot ayant une voie de passage ouverte (18) à travers cette dernière pour le passage du liquide vers/depuis la chambre ; **caractérisé en ce que** les parties de goulot et de corps (12, 14) se coupent dans une boucle fermée (20) d'un encombrement circulaire et d'un profil non plan.

2. Récipient en plastique selon la revendication 1, dans lequel la partie de corps (12), la partie de goulot (14) et la voie de passage ouverte (18) ont un axe longitudinal commun (XX), et la boucle fermée (20) est concentrique par rapport audit axe longitudinal.

3. Récipient en plastique selon la revendication 1, dans lequel la base de la partie de goulot (14) a une partie sensiblement cylindrique (22) avec un axe longitudinal, avec la boucle fermée (20) qui s'incurve autour de l'axe longitudinal à un rayon constant et dans une direction parallèle à l'axe longitudinal.

4. Récipient en plastique selon la revendication 3, dans lequel la partie de corps (12) définit des épaulements (24) et la boucle fermée (20) est positionnée au niveau de la transition située entre la partie sensiblement cylindrique (22) et les épaulements de la partie de corps.

5. Récipient en plastique selon la revendication 3 ou la revendication 4, dans lequel la partie cylindrique (22) définit un encombrement circulaire.

6. Récipient en plastique selon la revendication 4 ou 5, dans lequel les parois latérales de la partie cylindrique (22) sont parallèles à l'axe longitudinal.

7. Procédé pour fabriquer un récipient en plastique selon l'une quelconque des revendications 1 à 6, le procédé comprenant les étapes consistant à prévoir un outil de moulage (50) configuré pour former un récipient ayant une partie de corps (12) définissant une chambre pour stocker du liquide ; et une partie de goulot (14) s'étendant à partir de la partie de corps, la partie de goulot ayant une voie de passage ouverte (18) à travers cette dernière pour le passage du liquide vers/depuis la chambre, dans lequel les parties de goulot et de corps (12, 14) se coupent dans une boucle fermée (20) qui a un profil non plan, et mouler par extrusion-soufflage du plastique dans le moule afin de produire le récipient, **caractérisé en ce que** l'outil de moulage comprend un bloc de goulot (52) pour former une partie filetée du récipient, et un bloc de corps (54) comprenant une cavité (60) configurée pour former les épaulements (24) du récipient, dans lequel le bloc de corps est en outre configuré pour produire une formation intermédiaire entre la partie filetée et les épaulements du récipient, dans lequel la formation intermédiaire apparait sous la forme de la partie de goulot (14), et dans lequel l'intersection de la formation intermédiaire et des épaulements (24) est une boucle fermée non plane (20).

8. Procédé selon la revendication 7, dans lequel la formation intermédiaire est formée au niveau de l'extrémité supérieure du bloc de corps (54), afin d'être adjacente à une ligne de division (64) entre le bloc de goulot (52) et le bloc de corps (54) pendant le moulage.

9. Procédé selon la revendication 8, dans lequel le bloc de corps (54) est configuré de sorte que la formation intermédiaire définit une partie cylindrique (22) ayant des parois latérales s'étendant de manière parallèle et concentrique avec l'axe central longitudinal du récipient.
